# EUROPEAN PATENT SPECIFICATION

(11) **EP 1 180 339 B1**
(45) Date of publication and mention of the grant of the patent: **30.03.2005**
(21) Application number: 01870176.3
(22) Date of filing: 13.08.2001
(51) Int. Cl.: A47J 37/07

(54) **Collapsible barbecue device**
Zusammenklappbares Barbecuegerät
Appareil de barbecue pliable

(30) Priority: 14.08.2000 BE 200000508
(43) Date of publication of application: 20.02.2002
(73) Proprietor: Bracke, Paul, 8820 Torhout (BE)
(72) Inventor: Bracke, Paul, 8820 Torhout (BE)
(74) Representative: Luys, Marie-José A.H.

(56) References cited:
- US-A- 4 726 349

## Description

The present invention relates to a collapsible barbecue device as disclosed in the preamble of the first claim. When the barbecue grill is not in use, components thereof may be disassembled and received in the supporting frame as well as in and on the ash catcher covered by a cooking grid, so that the whole collapsed barbecue grill can be effortlessly pulled to move.

Such a collapsible barbecue device is known from US-A-6205912. The collapsible barbecue device disclosed in US-A-6205912 comprises a tray-like ash catcher, being provided at a bottom surface with a pair of wheeled collapsible legs. It is also provided along the lateral walls of its top surface with two outward bent edges to provide two supporting frames, for supporting a cooking grid. Along a rear wall of the top surface of the device, the device is provided with an inward bent edge to provide a baffle. In this way, a cooking grid having front hooks may be removably positioned on and between the two supporting frames and below the baffle. The ash catcher is also provided with two bar receivers for receiving a suspension grid set, extending in height direction of the ash catcher. To collapse the barbecue device, first the suspension grid set needs to be disengaged from the ash catcher after which the cooking grid may be removed from the supporting frames. Sequentially, the components of the suspension grid set are laid in the ash catcher, after which the cooking grid is put back into the supporting frames and the baffle above the tray of the ash catcher. The wheeled legs may be folded to the bottom of the ash catcher, enabling effortless pull of the barbecue device.

This known collapsible barbecue device is a rather compact structure, leaving no space for windscreens. This makes cooking, especially on windy days, rather difficult.

It is the object of this invention to provide a collapsible barbecue device on which cooking may be very much improved on windy days.

This is achieved according to the invention with the technical features of the characterising part of the first claim.

By providing a first windscreen along at least one transversal and one longitudinal side of the barbecue device, and a second one on the top of the babecue device, not only the formation, but also the contact of smoke, released by the burning of the charcoal, with the food positioned on the cooking grid may be minimised. The latter may be achieved by placing the barbecue in an optimal position with respect to the direction of the wind, such that the smoke may not be going in an upward direction, but rather in horizontal direction and thus away from the food. Since the contact of smoke with food would otherwise lead to the formation of carcinogenic benzopyrenes in the food, the latter may be minimised in the present invention. The first windscreen may cover the transversal side of the barbecue along its entire length, or along only a part its length.

The removable mounting of the windscreens on the barbecue device, allows the barbecue from still being collapsible. In addition, since the back- and side windscreen consists of a metal plate folded at both edges over an angle of 90°, it may serve as a cover to put upon the ash catcher as a protection against rain and dust when the barbecue device is not in use.

The skeletal frame of the barbecue device is preferably built up of bars linked to each other in three dimensions with clips. Since the clips each have a supporting power of 500 kg, the skeletal frame is solid and stable. Moreover, these clips allow for a variety of construction possibilities, such as windscreens, working tops, plates provided with holes for additional ash catchers. These accessories are all supported by bars, that are on their turn stably linked to the skeletal frame, and thus resulting in a stable attachment of the windscreens, working tops and additional ash catchers.

By providing at least one additional ash catcher, the cooking possibilities on the barbecue device may be very much enhanced. These additional ash catchers may be ideal for preparing for instance sauces, vegetables etc. On the other hand, the glowing charcoals of these additional fires may be transferred to the main ash catcher, so that the additional ash catchers may also be used as a barbecue igniter.

To store the barbecue device, the barbecue deviced is disassembled in the following way. The side working tops and their supporting bars, the perforated plates and their supporting bars, as well as the vertical bars extending in height direction of the ash catcher at the front of the device, are put within the ash catcher. The cooking grid and the aid skeletal frame with the top windscreen are put on top of the ash catcher, and the front working top and the two additional ash catchers are put on the bottom working top within the skeletal frame. Finally, the back- and side wind screen is put on top of the whole to cover and protects the barbecue device against rain and dust.

The invention is further elucidated in the attached figures and description of the figures.

Figure 1 shows a front side of the barbecue device in a preferred embodiment.

Figure 2 shows a side view of the barbecue device, whereby the side working tops, located at the bottom and top of the barbecue device, and the additional ash catchers, located at the level of the ash catcher, are omitted.

Figure 3 shows the barbecue device when not in use.

Figure 4a and 4b show a detailed view of the clips.

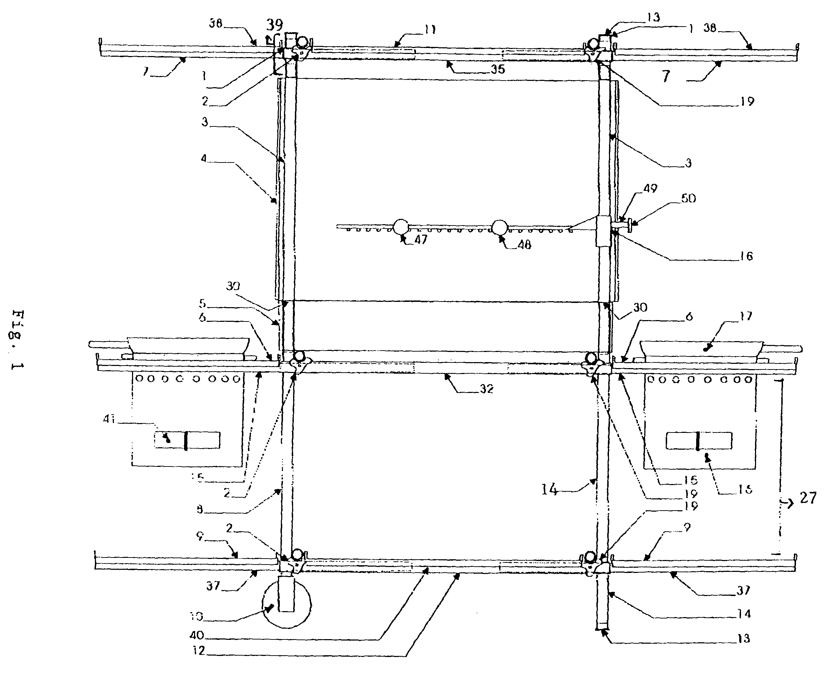

The barbecue device shown in Figure 1 comprises a supporting frame 27, supporting an ash catcher 5, a cooking grid 18, windscreens 4, 11, an aid skeletal frame 39, working tops 9 and 38, and perforated plates 6 containing further ash catchers 16.

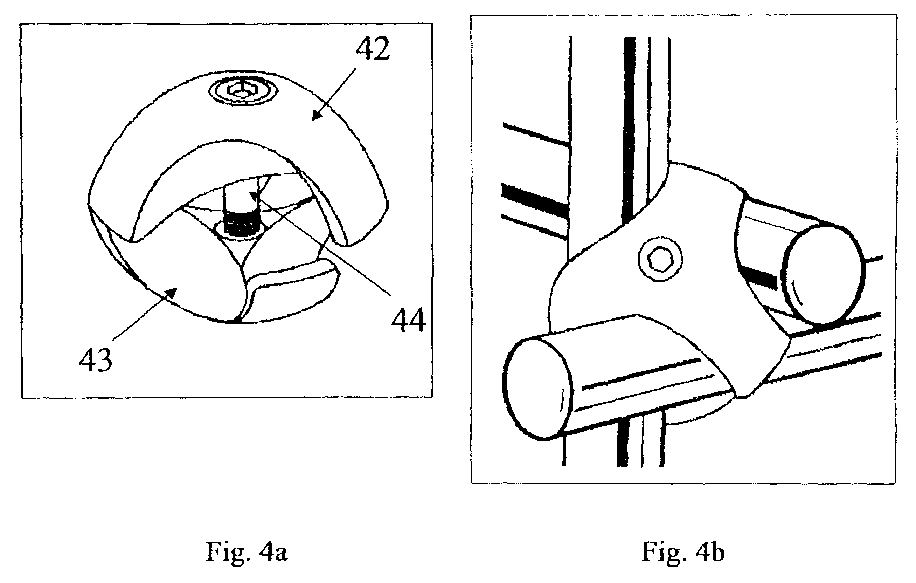

The supporting frame 27 comprises bars 8, 12, 14, 24, 32, 33 linked to each other in three dimensions by clips 2, 19. The clips 2, 19, shown in Figure 4a, comprise a first cap 42, in the form of a hollow hemisphere, in which three arcuate cut-aways are left out and a similar second cap 43, both caps being attached to each other, for example with a screw 44 in such a way that the enclosed spaces between the caps are suited to receive a first e.g. 24 and second e.g. 12 horizontal bar, the second horizontal bar being positioned perpendicular to the first horizontal bar, and a vertical bar e.g. 8 perpendicular to the first and second horizontal bars.

In the supporting frame 27 shown in Figures 1-3, the two legs 8 contain a wheel 10 of for example plastic; the other two legs 14 contain end caps 13. This facilitates displacing the device. The bars of the supporting frame 27 may be made for example of corrosion resistant aluminium alloy or another corrosion resistant metal.

The ash catcher 5, mounted on top of the supporting frame 27, consists of a horizontal tray for receiving the charcoal. The ash catcher 5 comprises an internal wall, which is set with refractory stones at the bottom and sides. The ash catcher 5 shown in Figure 1-3 for example has the shape of a rectangle. The ash catcher may also for example be oval, or have the shape of a circle, a square, or any other desirable shape. The ash catcher may be made for example of corrosion resistant metal, for instance aluminium alloy or stainless steal. In the device shown in Figures 1-2, each of the four edges of the bottom plate of the ash catcher contain an opening 29, 30 for detachably mounting a skeletal frame above the ash catcher onto the corresponding bars 8, 14 of the supporting frame 27. The dimensions of the ash catcher, especially the length and width, may be varied within wide ranges. The height of the ash catcher will be selected such that an optimal ignition of the fire is obtained.

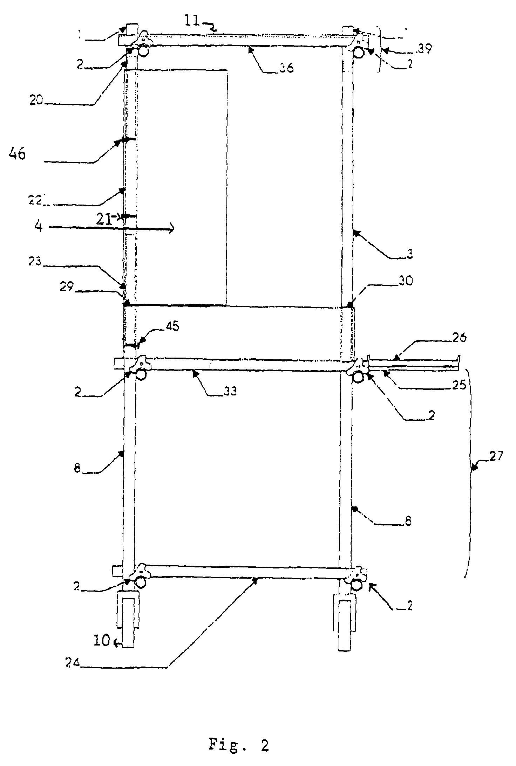

In the openings 29 at the first and second edge of the ash catcher 5, respectively a first and second bar 23 extending in height direction of the ash catcher 5 are received in the corresponding bars 8, 14 of the supporting frame 27. These bars 23 are supported by pins 45, that are screwed in the bars 8, 14 in transversal direction, and in the vicinity of the bottom of the ash catcher 5. This first and second bar 23 are removably connectable in height direction to respectively a third and fourth bar 22. In each bar 22, two pins 21, 46 are screwed in transversal direction, serving to removably attach the bars 22 to a first windscreen 4, extending along the longitudinal side and at least one transversal extending side of the ash catcher 5. The windscreen 4 shown in Figures 1-2 is a metal plate, folded over an angle of 90° at both ends, such that the surface in between the two folds forms the back plate of the windscreen 4, whereas both side surfaces form the side plates of the windscreen 4. The wind screen 4 shown in Figure 2 covers the transversal side of the barbecue only along a part of its length. It may also cover the transversal side along its entire length.

In the openings 30 in the ash catcher 5 at the third and fourth edge of the ash catcher 5, respectively a fifth and sixth bar 3 extending in height direction of the ash catcher are received in the corresponding bars 8, 14 of the supporting frame 27. A cooking grid 18 may be attached to at least one of these bars 3, over which the cooking grid is movably mounted in vertical direction. Furthermore, the bar 3 forms a rotation axis for the cooking grid, with which the cooking grid is rotatable away from the fire, whereby the cooking grid stays in the same horizontal plane. The cooking grid may also rotate vertically, from a position whereby the horizontal surface of the cooking grid is parallel to the bottom face of the ash catcher 5, to a position whereby this surface is perpendicular to the bottom face of the ash catcher 5. This may facilitate the cleaning of the cooking grid. The cooking grid shown in Figure 1 has two handles 47, 48, extending from the front side of the barbecue device, by which the cooking grid can be pulled to move away from the fire in the same horizontal plane, allowing to take the food of the cooking grid in a safe way. A screw 49 with cap 50 will fix the desired position of the cooking grid with regard to the vertical bar 3.

The barbecue device comprises an aid skeletal frame 39 for receiving the top windscreen 11, covering the top face of the device. The aid skeletal frame comprises bars 1, 35, 36, linked to each other in three dimensions by clips 2, 19. The vertical bars 1 of the aid skeletal frame, the bars 1 having end caps 13, extend downwardly from the top face enclosed by the horizontal bars 35, 36, and they serve to removably attach the aid skeletal frame to the lower part of the device. At the front side of the device, bars 1 are removably attached to the fifth and sixth bar 3. At the back side of the device, bars 1 are removably attached to a seventh and eight bar 20, extending in downward direction of the aid skeletal frame. The seventh and eight bar 20 are mounted to the third and fourth bar 22. The pins 46, screwed in the third and fourth bars 22 in transversal direction, support the seventh and eight bars 20. In this way, the bars 20 can not sink too deep in the bars 22.

As shown in Figure 1, two additional ash catchers 16 may be provided at the left and the right side of the barbecue device at the level of the ash catcher. These ash catchers are received in therefore provided holes in the horizontal plates 6, which are on their turn supported by a ninth and tenth bar 15, inserted in the bars 32 of the supporting frame 27 at the third and fourth edge of the ash catcher and extending away from the ash catcher in longitudinal direction of the barbecue device. The plates 6 are provided with clamping means to allow the removable attachment of the plates 6 to the supporting horizontal bars 15. The additional ash catchers 16 can be made of stainless steal. They are provided with a grid, located on on average 1 /4 of the height below, where the charcoal is put, a barbecue igniter installed under the grid, and a hole 41 in the vicinity of the bottom with an adjustable opening to control the air supply. These additional ash catchers can be used as an additional charcoal fire by placing wok fires 17 on top of the ash catchers. On the other hand, they can be used as barbecue igniters.

The barbecue device shown in Figure 1 may further comprise at the bottom and the top horizontal working tops 9, 38 which are supported by a thirteenth and fourteenth, respectively a fifteenth and sixteenth horizontal bar 37, 7 inserted in the bars 12, 35 of the skeletal frame and extending in longitudinal direction of the barbecue device. The working tops 9, 38 are provided with clamping means in order to allow the removable attachment of the working tops 9, 38 to the supporting horizontal bars 7, 37. As shown in Figure 2, an additional horizontal working top 26 may be provided at the front side at the level of the bottom of the ash catcher. This working top 26 is supported by an eleventh and twelfth horizontal bar 25, inserted in the bars 33 of the supporting frame 27 at the third and fourth edge of the ash catcher 5 and extending away from the ash catcher in transversal direction of the barbecue device. The working top 26 is provided with clamping means in order to allow the removable attachment of the working top 26 to the supporting horizontal bars 25. Finally, the barbecue device may comprise another horizontal working top 40 at the bottom within the supporting frame 27, supported by the bars 12, 24. This working top 40 is again provided with clamping means in order to allow the removable attachment of the working top 40 to the supporting bars 12, 24. All the mentioned working tops may serve as spaces for preparing the dishes.

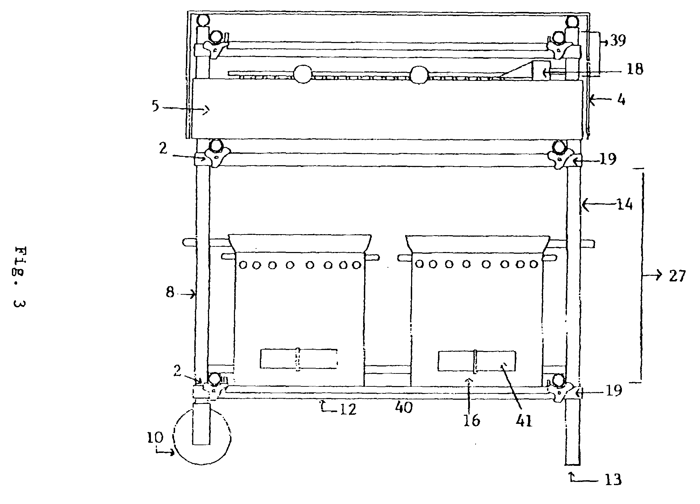

To store the barbecue device, as shown in Figure 3, the side working tops 9, 38 and their supporting bars (*i.e.* the thirteenth and fourteenth bars 37, the fifteenth and sixteenth bars 7) the perforated plates 6 and their supporting bars (*i.e.* the ninth and tenth bars 15), as well as the fifth and sixth bars 3, the seventh and eight bars 20, the first and second bars 23 and the eleventh and twelfth bars 25 are put within the ash catcher 5. The cooking grid 18 and the aid skeletal frame 39 with the top windscreen 11 are put on top of the ash catcher 5 and the front working top 26 and the two additional ash catchers 16 are put on the bottom working top 40 within the skeletal frame 27. Finally, the back- and side screen 4, still attached to the bars 22, is put on top of the whole to cover and protect the barbecue device against rain and dust.

## Claims

1. A collapsible barbecue device comprising a supporting frame (27) for carrying an ash catcher (5), the ash catcher (5) having a predetermined depth, the device further comprising a cooking grid (18) to be positioned above the ash catcher (5) for cooking food, **characterised in that** the ash catcher (5) is provided at a first and second edge of a longitudinal side at a back side of the ash catcher (5) with means (8, 14) for receiving respectively a first and second vertical bar (23) extending in height direction of the ash catcher (5), the first and second bar (23) being removably connectable in height direction to respectively a third and fourth vertical bar (22), and **in that** the device comprises a first windscreen (4) along the longitudinal side and at least a part of at least a transversal extending side of the ash catcher (5), the windscreen (4) being removably attachable to the third and fourth bar (22).

2. A collapsible barbecue device as claimed in claim 1, **characterised in that** the device comprises means for removably attaching a second windscreen (11), substantially covering an open top face enclosed by the first windscreen (4).

3. A collapsible barbecue device as claimed in claim 2, **characterised in that** the means for attaching the second windscreen (11) comprise a fifth and sixth vertical bar (3) extending in height direction of the device and received in corresponding means (8, 14) at a third and fourth edge of the ash catcher (5), and a seventh and eight vertical bar (20), extending in height direction of the device and removably positioned upon the third and fourth bar (22), the fifth (3), sixth (3), seventh (20) and eight (20) bar being connected by a supporting frame (39) for removably attaching the second windscreen (11).

4. A collapsible barbecue device as claimed in claim 1-3, **characterised in that** the means for connecting two or more bars comprise a clip (2, 19), comprising a first cap (42), in the form of a hollow hemisphere, in which three arcuate cut-aways are left out and a similar second cap (43), both caps being attached to each other to enclose a space suitable for receiving two horizontal bars, perpendicular to each other, and a vertical bar perpendicular to both horizontal bars.

5. A collapsible barbecue device as claimed in claim 1-4, **characterised in that** the barbecue device comprises a cooking grid (18) being removably attachable to the fifth and sixth bar (3), the cooking grid being displaceable in height direction and rotably mounted with respect to the fifth or sixth bar (3).

6. A collapsible barbecue device as claimed in claim 1-5, **characterised in that** the first edge is provided with means (32) for removably receiving a ninth horizontal bar (15) extending in longitudinal direction of the device, **in that** the third edge of the ash catcher (5) opposite the first edge is provided for removably receiving a tenth horizontal bar (15) extending in longitudinal direction of the device, and **in that** the device comprises a plate (6) with clamping means for removably attaching the plate to the ninth and tenth bar (15), the plate (6) comprising a hole for receiving a further ash catcher (16).

7. A collapsible barbecue device as claimed in claim 6, **characterised in that** the further ash catcher (16) comprises a grid and a barbecue igniter installed below the grid.

8. A collapsible barbecue device as claimed in claim 6 or 7, **characterised in that** the further ash catcher (16) contains in the vicinity of its bottom face at least one hole (41) with an adjustable opening to allow controlling the air supply.

9. A collapsible barbecue device as claimed in claims 1-8, **characterised in that** the the third and fourth edge of the ash catcher are provided with means (33) for removably receiving at the front side of the ash catcher (5) an eleventh and twelfth horizontal bar (25), extending in transversal direction of the device, and **characterised in that** the device comprises a working top (26) with clamping means for removably attaching the working top (26) to the eleventh and twelfth bar (25).

10. A collapsible barbecue device as claimed in claims 1-9, **characterised in that** the device comprises at both the bottom level and the level of the second windscreen (11), means (12, 35) for receiving a thirteenth and fourteenth (37), respectively a fifteenth and sixteenth (7) horizontal bar, extending in longitudinal direction of the device, and **in that** the device comprises working tops (9, 38) with clamping means for removably attaching the working tops to the thirteenth and fourteenth (37), respectively the fifteenth and sixteenth (7) bar.

## Patentansprüche

1. Zusammenklappbares Barbecuegerät, das einen Tragrahmen (27) zum Aufnehmen eines Aschefängers (5) umfasst, wobei der Aschefänger (5) eine zuvor festgelegte Tiefe aufweist, wobei das Gerät des Weiteren einen Bratrost (18) umfasst, der über dem Aschefänger (5) angeordnet ist und der Zubereitung von Lebensmitteln dient, **dadurch gekennzeichnet, dass** der Aschefänger (5) an einem ersten und einem zweiten Rand einer Längsseite an einer Rückseite des Aschefängers (5) mit Mitteln (8, 14) zum Aufnehmen einer ersten bzw. einer zweiten vertikalen Stange (23), die sich in Richtung der Höhe des Aschefängers (5) erstrecken, versehen ist, wobei die erste und die zweite Stange (23) in Höhenrichtung lösbar mit einer dritten bzw. einer vierten vertikalen Stange (22) verbunden werden können, und **dadurch gekennzeichnet, dass** das Gerät einen ersten Windschutz (4) entlang der Längsseite und wenigstens entlang eines Teils wenigstens einer sich in Querrichtung erstreckenden Seite des Aschefängers (5) umfasst, wobei der Windschutz (4) lösbar an der dritten und vierten Stange (22) angebracht werden kann.

2. Zusammenklappbares Barbecuegerät nach Anspruch 1, **dadurch gekennzeichnet, dass** das Gerät Mittel zum lösbaren Anbringen eines zweiten Windschutzes (11) umfasst, der im Wesentlichen eine offene Oberseite bedeckt, die von dem ersten Windschutz (4) umschlossen wird.

3. Zusammenklappbares Barbecuegerät nach Anspruch 2, **dadurch gekennzeichnet, dass** die Mittel zum Anbringen des zweiten Windschutzes (11) eine fünfte und eine sechste vertikale Stange (3), die sich in Richtung der Höhe des Gerätes erstrecken und in entsprechenden Mitteln (8, 14) an einem dritten und vierten Rand des Aschefängers (5) aufgenommen sind, und eine siebente und eine achte vertikale Stange (20), die sich in Richtung der Höhe des Gerätes erstrecken und lösbar auf der dritten und vierten Stange (22) angeordnet sind, umfassen, wobei die fünfte (3), die sechste (3), die siebente (20) und die achte (20) Stange durch einen Tragrahmen (39) miteinander verbunden sind, dergestalt, dass der zweite Windschutz (11) lösbar angebracht werden kann.

4. Zusammenklappbares Barbecuegerät nach den Ansprüchen 1 bis 3, **dadurch gekennzeichnet, dass** die Mittel zum Verbinden von zwei oder mehr Stangen eine Klemmschelle (2, 19) umfassen, die eine erste Kappe (42) in Form einer hohlen Halbkugel umfasst, in der drei bogenförmige Ausnehmungen eingearbeitet sind, und eine ähnliche zweite Kappe (43) umfasst, wobei beide Kappen dergestalt aneinander befestigt sind, dass sie einen Raum umschließen, der zum Aufnehmen zweier horizontaler Stangen, die im rechten Winkel zueinander angeordnet sind, und einer vertikalen Stange, die senkrecht zu den beiden horizontalen Stangen angeordnet ist, geeignet ist.

5. Zusammenklappbares Barbecuegerät nach den Ansprüchen 1 bis 4, **dadurch gekennzeichnet, dass** das Barbecuegerät einen Bratrost (18) umfasst, der lösbar an der fünften und sechsten Stange (3) befestigt werden kann, wobei der Bratrost höhenverstellbar ist und relativ zu der fünften oder sechsten Stange (3) drehbar montiert ist.

6. Zusammenklappbares Barbecuegerät nach den Ansprüchen 1 bis 5, **dadurch gekennzeichnet, dass** der erste Rand mit Mitteln (32) versehen ist, um lösbar eine neunte horizontale Stange (15) aufzunehmen, die sich in Längsrichtung des Gerätes erstreckt, und **dadurch gekennzeichnet, dass** der dritte Rand des Aschefängers (5) gegenüber dem ersten Rand so konfiguriert ist, dass er lösbar eine zehnte horizontale Stange (15) aufnehmen kann, die sich in Längsrichtung des Gerätes erstreckt, und **dadurch gekennzeichnet, dass** das Gerät eine Platte (6) mit Klemmmitteln umfasst, um die Platte lösbar an der neunten und zehnten Stange (15) anzubringen, wobei die Platte ein Loch umfasst, um einen weiteren Aschefänger (5) aufzunehmen.

7. Zusammenklappbares Barbecuegerät nach Anspruch 6, **dadurch gekennzeichnet, dass** der weitere Aschefänger (16) einen Rost und einen unter dem Rost installierten Barbecue-Anzünder umfasst.

8. Zusammenklappbares Barbecuegerät nach Anspruch 6 oder 7, **dadurch gekennzeichnet, dass** der weitere Aschefänger (16) in unmittelbarer Nähe seiner Unterseite wenigstens ein Loch (41) mit einer verstellbaren Öffnung zur Regelung der Luftzufuhr enthält.

9. Zusammenklappbares Barbecuegerät nach den Ansprüchen 1 bis 8, **dadurch gekennzeichnet, dass** der dritte und der vierte Rand des Aschefängers mit Mitteln (33) versehen sind, um an der Vorderseite des Aschefängers (5) lösbar eine elfte und eine zwölfte horizontale Stange (25) aufzunehmen, die sich in Querrichtung des Gerätes erstreckt, und **dadurch gekennzeichnet, dass** das Gerät eine Arbeitsoberfläche (26) mit Klemmmitteln umfasst, um die Arbeitsoberfläche (26) lösbar an der elften und zwölften Stange (25) zu befestigen.

10. Zusammenklappbares Barbecuegerät nach den Ansprüchen 1 bis 9, **dadurch gekennzeichnet, dass** das Gerät sowohl auf Bodenhöhe als auch in Höhe des zweiten Windschirms (11) Mittel (12, 35) umfasst, um eine dreizehnte und vierzehnte (37) bzw. eine fünfzehnte und sechzehnte (7) horizontale Stange aufzunehmen, die sich in Längsrichtung des Gerätes erstrecken, und **dadurch gekennzeichnet, dass** das Gerät Arbeitsoberflächen (9, 38) mit Klemmmitteln umfasst, um die Arbeitsoberflächen lösbar an der dreizehnten und vierzehnten (37) bzw. der fünfzehnten und sechzehnten (7) Stange zu befestigen.

## Revendications

1. Appareil de barbecue pliable comprenant un cadre de support (27) pour porter un récepteur de cendres (5), le récepteur de cendres (5) ayant une profondeur déterminée, l'appareil comprenant en outre une grille de cuisson (18) à positionner au-dessus du récepteur de cendres (5) pour cuire les aliments, **caractérisé en ce que** le récepteur de cendres (5) est pourvu au niveau d'un premier et d'un deuxième bord d'un côté longitudinal sur le côté arrière du récepteur de cendres (5) de moyens (8, 14) pour recevoir respectivement une première et une deuxième barre verticale (23) s'étendant dans le sens de la hauteur du récepteur de cendres (5), la première et la deuxième barre (23) pouvant être connectée de manière amovible dans le sens de la hauteur respectivement à une troisième et une quatrième barre verticale (22), et **en ce que** l'appareil comprend un premier écran anti-vent (4) le long du côté longitudinal et d'au moins une partie d'au moins un côté du récepteur de cendres (5) s'étendant transversalement, l'écran anti-vent (4) pouvant être attaché de manière amovible à la troisième et à la quatrième barre (22).

2. Appareil de barbecue pliable comme revendiqué dans la revendication 1, **caractérisé en ce que** l'appareil comprend des moyens pour attacher de manière amovible un deuxième écran anti-vent (11) couvrant sensiblement une face supérieure ouverte entourée par l'écran anti-vent (4).

3. Appareil de barbecue pliable comme revendiqué dans la revendication 2, **caractérisé en ce que** les moyens pour attacher le deuxième écran anti-vent (11) comprennent une cinquième et une sixième barre verticale (3) s'étendant dans le sens de la hauteur de l'appareil et reçues dans des moyens correspondants (8, 14) au niveau d'un troisième et d'un quatrième bord du récepteur de cendres (5), et une septième et une huitième barre verticale (20) s'étendant dans le sens de la hauteur de l'appareil et positionnées de manière amovible sur la troisième et la quatrième barre (22), la cinquième (3), la sixième (3), la septième (20) et la huitième (20) barre étant connectées à un cadre de support (39) pour attacher le deuxième écran anti-vent (11) de manière amovible.

4. Appareil de barbecue pliable comme revendiqué dans la revendication 1 - 3, **caractérisé en ce que** les moyens pour connecter deux barres ou plus comprennent une fixation (2, 19) comprenant une première coiffe (42) en forme d'hémisphère creuse dans laquelle trois dégagements arqués sont omis et une deuxième coiffe (43) similaire, les deux coiffes étant attachées l'une à l'autre pour entourer un espace convenant pour recevoir deux barres horizontales, perpendiculaires l'une à l'autre, et une barre verticale perpendiculaire aux deux barres horizontales.

5. Appareil de barbecue pliable comme revendiqué dans la revendication 1 - 4, **caractérisé en ce que** l'appareil de barbecue comprend une grille de cuisson (18) pouvant être attachée de manière amovible à la cinquième et à la sixième barre (3), la grille de cuisson pouvant être déplacée dans le sens de la hauteur et étant montée de manière rotative par rapport à la cinquième ou à la sixième barre (3).

6. Appareil de barbecue pliable comme revendiqué dans la revendication 1 - 5, **caractérisé en ce que** le premier bord est pourvu de moyens (32) pour recevoir de manière amovible une neuvième barre (15) horizontale s'étendant dans le sens longitudinal de l'appareil, **en ce que** le troisième bord du récepteur de cendres (5) opposé au premier bord est prévu pour recevoir de manière amovible une dixième barre (15) horizontale s'étendant dans le sens longitudinal de l'appareil, et **en ce que** l'appareil comprend une plaque (6) avec des moyens de serrage pour attacher de manière amovible la plaque à la neuvième et la dixième barre (15), la plaque (6) comprenant un trou pour recevoir un autre récepteur de cendres (16).

7. Appareil de barbecue pliable comme revendiqué dans la revendication 6, **caractérisé en ce que** l'autre récepteur de cendres (16) comprend une grille et un alllumeur de barbecue installé sous la grille.

8. Appareil de barbecue pliable comme revendiqué dans la revendication 6 ou 7, **caractérisé en ce que** l'autre récepteur de cendres (16) contient à proximité de sa face inférieure au moins un trou (41) avec une ouverture ajustable pour permettre de contrôler l'alimentation en air.

9. Appareil de barbecue pliable comme revendiqué dans les revendications 1 - 8, **caractérisé en ce que** le troisième et le quatrième bord du récepteur de cendres sont pourvus de moyens (33) pour recevoir de manière amovible au niveau du côté antérieur du récepteur de cendres (5) une onzième et une douzième barre (25) horizontale s'étendant dans le sens transversal de l'appareil, et **caractérisé en ce que** l'appareil comprend un plan de travail (26) avec des moyens de serrage pour attacher de manière amovible le plan de travail (26) à la onzième et la douzième barre (25).

10. Appareil de barbecue pliable comme revendiqué dans les revendications 1 - 9, **caractérisé en ce que** l'appareil comprend tant au niveau inférieur qu'au niveau du deuxième écran anti-vent (11) des moyens (12, 35) pour recevoir une treizième et une quatorzième (37), respectivement une quinzième et une seizième (7) barre horizontale s'étendant dans le sens longitudinal de l'appareil, et **en ce que** l'appareil comprend des plans de travail (9, 38) avec des moyens de serrage pour attacher de manière amovible les plans de travail à la treizième et la quatorzième (37), respectivement à la quinzième et la seizième (7) barre.
